(19) **Europäisches Patentamt**
**European Patent Office**
**Office européen des brevets**

(11) **EP 2 276 209 B1**

(12) **FASCICULE DE BREVET EUROPEEN**

(45) Date de publication et mention
de la délivrance du brevet:
**24.04.2013 Bulletin 2013/17**

(51) Int Cl.:
*H04L 25/02* (2006.01)       *H04L 27/26* (2006.01)
*H04L 5/00* (2006.01)

(21) Numéro de dépôt: **10167368.9**

(22) Date de dépôt: **25.06.2010**

(54) **Procédé de détermination de la taille d'un champ d'entête**

Verfahren zur Bestimmumg der Länge eines Kopffelds

Method for determining the length of a header field

(84) Etats contractants désignés:
**AL AT BE BG CH CY CZ DE DK EE ES FI FR GB
GR HR HU IE IS IT LI LT LU LV MC MK MT NL NO
PL PT RO SE SI SK SM TR**

(30) Priorité: **30.06.2009 FR 0954454**

(43) Date de publication de la demande:
**19.01.2011 Bulletin 2011/03**

(73) Titulaire: **France Télécom**
**75015 Paris (FR)**

(72) Inventeur: **Ouzzif, Meryem**
**22300, LANNION (FR)**

(56) Documents cités:
**EP-A1- 1 940 068     WO-A1-2005/041508**

• **ZHANG ZHAO-YANG: "A novel OFDM
transmission scheme with length-adaptive Cyclic
Prefix" JOURNAL OF ZHEJIANG UNIVERSITY.
SCIENCE, ZHEJIANG UNIVERSITY PRESS,
HANGZHOU, CN, vol. 5, no. 11, 7 juillet 2003
(2003-07-07), pages 1336-1342, XP002366741
ISSN: 1009-3095**

**Description**

L'invention se situe dans le domaine des télécommunications, et plus particulièrement dans le domaine des techniques de transmission numérique de données utilisant des modulations multi-porteuses de type OFDM (pour *Orthogonal Frequency Division Multiplexing,* ou multiplexage par division de fréquence orthogonale) ou DMT (pour *Discrete MultiTone,* ou multitonalité discrète en français). De telles techniques de transmission sont par exemple utilisées dans le cadre de transmissions xDSL (pour *Digital Subscriber Line,* ou ligne numérique d'abonné en français) ou radio ou communications par courants porteurs.

De telles modulations multi-porteuses sont particulièrement bien adaptées à des milieux de transmission présentant des évanouissements dans le domaine fréquentiel, c'est-à-dire des fréquences qui disparaissent du spectre, ou ayant des réponses impulsionnelles de canaux de transmission longues. De tels milieux de transmission sont par exemple une paire de fils de cuivre appartenant à un câble de télécommunications, un fil d'un câble électrique ou encore une fibre optique. Ces évanouissements dans le domaine fréquentiel ou des réponses impulsionnelles de canaux de transmission longues sont occasionnés notamment par les composants utilisés pour la transmission ou la topologie du milieu de transmission.

Les techniques de modulation multiporteuses consistent à découper la bande de fréquence du canal de transmission en une pluralité de sous-bandes de largeur étroite; à chaque sous-bande de fréquences est associée une sous-porteuse destinée à transmettre les données. Ceci permet de surmonter les problèmes liés à l'évanouissement du canal de transmission.

Afin de réduire l'effet dispersif de la réponse impulsionnelle du canal de transmission, un champ d'entête, encore appelé préfixe cyclique ou « *cyclic prefix* » en terminologie anglo-saxonne, est inséré en entête de chaque bloc de données appartenant à un signal de données destiné à être transmis au travers du canal de transmission. Un tel champ d'entête consiste par exemple en une recopie des données constitutives du bloc de données. Le champ d'entête a pour fonction de réduire l'effet dispersif de la réponse impulsionnelle du canal de transmission tout en préservant la propriété d'orthogonalité des sous-porteuses. L'effet dispersif du canal de transmission est à l'origine d'interférences existant entre blocs de données.

Généralement, la taille du champ d'entête est fixée à une valeur prédéterminée spécifiée dans une norme relative aux équipements utilisés pour réaliser la transmission du signal de données.

Cependant, l'introduction du champ d'entête crée une redondance qui influe sur le débit du canal de transmission. En effet, plus la longueur du champ d'entête est élevée, plus le débit de transmission est réduit. Cependant, a contrario, un champ d'entête de grande longueur permet une meilleure réduction du bruit dû aux phénomènes d'interférences sur le canal de transmission.

Ainsi, si la taille du champ d'entête est trop courte par rapport à la longueur du canal de transmission, un bruit dû aux interférences présentes dans le canal de transmission, c'est-à-dire le bruit dû aux interférences entre blocs de données et le bruit dû aux interférences entre sous-porteuses, n'est pas suffisamment corrigé, la transmission est de mauvaise qualité. Le débit de transmission reste cependant peu affecté par la présence du champ d'entête, de faible longueur.

A l'inverse, si la taille du champ d'entête est trop longue par rapport à la longueur du canal de transmission, le bruit dû aux interférences présentes dans le canal de transmission est complètement absorbé mais au prix d'une diminution du débit du canal de transmission. La taille du canal de transmission est fonction du nombre de trajets possibles pour le canal de transmission.

Afin de remédier à ces inconvénients, le document « A Novel OFDM transmission scheme with length-adaptative Cyclic Prefix » Z.Zhang, L. Lail, Journal of Zhejiang University Science, 2004 5(11):1336-1342, propose une méthode d'adaptation de la taille d'un champ d'entête.

Dans le cas de canaux de transmission lentement variable dans le temps tels que les canaux de transmission sur paire de cuivre (xDSL pour *Digital Subscriber Line* ou ligne numérique d'abonnés en français ; PLC pour *PowerLine Communications* ou courants porteurs en ligne en français) ou sur fibre optique, une phase d'échange entre l'équipement émetteur et l'équipement récepteur est mise en oeuvre préalablement à toute transmission de données utiles. Au cours de cette phase d'échange, on estime notamment la réponse impulsionnelle du canal de transmission afin de réaliser l'allocation de l'énergie en fonction de la fréquence des sous-porteuses et de pouvoir mettre en oeuvre une égalisation fréquentielle. L'égalisation fréquentielle consiste à compenser, pour chaque sous-porteuse, l'atténuation du canal de transmission.

Au cours de cette phase d'échange, une phase d'adaptation de la taille du champ d'entête est également mise en oeuvre afin d'optimiser le débit du canal de transmission.

La phase d'adaptation consiste à déterminer la dispersion des retards du canal de transmission (*Root Mean Square Delay Spread*) à partir de la réponse impulsionnelle du canal de transmission. Une fois la dispersion des retards du canal de transmission déterminée, la taille du champ d'entête est choisie selon une règle empirique qui préconise une taille du champ d'entête égale au double de la valeur de la dispersion des retards du canal de transmission.

Une telle solution n'est cependant pas satisfaisante car une telle approche empirique ne permet pas d'optimiser la taille du champ d'entête qui s'avère parfois trop court ou parfois trop long. Ceci a un impact négatif sur le débit du canal de transmission et la qualité de la transmission.

Le document EP 1 940 068 indiqué un procédé de détermination de la taille d'un champ d'entête d'un bloc de données transmis selon la technique OFDM.

Un des buts de l'invention est de remédier à des inconvénients de l'état de l'art.

A cette fin, l'invention propose un procédé de détermination de la taille d'un champ d'entête d'un bloc de données destiné à être transmis au travers d'un canal de transmission, lesdits blocs de données étant codés selon une technique de modulation multi-porteuses, le procédé comprenant au moins une itération des étapes suivantes :

a) une étape de choix d'une taille de champ d'entête parmi un ensemble de tailles prédéterminées distinctes de champs d'entête :
b) une étape de détermination, pour ladite taille de champ d'entête choisie, et en fonction d'une réponse impulsionnelle du canal de transmission, d'une densité spectrale de puissance d'un bruit dû aux interférences entre blocs de données et aux interférences entre porteuses présentes dans le canal de transmission,
c) une étape d'obtention d'un critère de performance du canal de transmission en fonction de ladite densité spectrale de puissance déterminée.

A l'issue desdites itérations, le procédé met en oeuvre une étape de sélection, parmi ledit ensemble, d'une taille de champ d'entête en fonction d'une valeur du critère de performance du canal associé à ladite taille de champ d'entête.

Une telle solution permet de sélectionner un champ d'entête dont la taille est adaptée au mieux au canal de transmission.

La taille du champ d'entête a un impact sur le bruit dû aux interférences présentes dans le système et donc sur les performances de ce dernier.

Connaissant la réponse impulsionnelle du canal de transmission, dont la mesure peut être effectuée soit dans le domaine temporel soit dans le domaine fréquentiel, on évalue pour différentes tailles du champ d'entête la densité spectrale de puissance du bruit dû aux interférences présentes dans le canal de transmission, c'est-à-dire le bruit dû aux interférences entre blocs de données et le bruit dû aux interférences entre sous-porteuses. En effet, la réponse impulsionnelle d'un canal de transmission peut être décomposée en trois parties : une première partie correspondant au maximum d'énergie du canal de transmission et dont la taille est sensiblement égale à la taille du champ d'entête, une deuxième partie et une troisième partie correspondant au bruit dû aux interférences présentes dans le canal de transmission.

Connaissant la densité spectrale de puissance du bruit dû aux interférences présentes dans le canal de transmission, il est possible de déterminer pour une taille de champ d'entête prédéterminée la valeur d'un critère de performance du canal de transmission qui sert de référence pour la sélection du champ d'entête.

Selon une caractéristique du procédé objet de l'invention, le critère de performance du canal de transmission tient compte du débit du canal de transmission. Notamment, la taille de champ d'entête sélectionnée est celle pour laquelle la valeur du débit du canal de transmission est maximale.

On peut ainsi optimiser le débit de transmission du canal, en opérant la sélection du champ d'entête dont la taille permet de maximiser ce débit.

Selon une caractéristique du procédé objet de l'invention, le critère de performance du canal de transmission tient compte de la valeur du bruit dû aux interférences présentes dans le canal de transmission.

Ainsi, le critère de sélection est, par exemple, un critère de sélection composite prenant en compte le débit du canal de transmission et le bruit dû aux interférences présentes dans le canal de transmission. Dans un tel cas de figure, la taille de champ d'entête sélectionnée est telle que le débit du canal de transmission est supérieur à un premier seuil correspondant à un débit minimum visé et le bruit dû aux interférences présentes dans le canal de transmission est inférieur à un deuxième seuil correspondant à un bruit dû aux interférences présentes dans le canal de transmission maximum toléré.

On peut ainsi sélectionner la taille de champ d'entête qui permet d'obtenir la meilleure qualité de transmission sur le canal.

Plus généralement, l'invention permet de réaliser un compromis entre le débit de transmission du canal et la qualité de la transmission, en jouant sur la taille du champ d'entête ainsi sélectionné.

L'invention concerne également un dispositif de détermination de la taille d'un champ d'entête d'un bloc de données destiné à être transmis au travers d'un canal de transmission, lesdits blocs de données étant codés selon une technique de modulation multi-porteuses, comprenant :

a) des moyens de choix d'une taille de champ d'entête parmi un ensemble de tailles prédéterminées distinctes de champs d'entête :

b) des moyens de détermination, pour ladite taille de champ d'entête choisie, et en fonction d'une réponse impulsionnelle du canal de transmission, d'une densité spectrale de puissance d'un bruit dû aux interférences entre blocs de données et aux interférences entre porteuses présentes dans le canal de transmission,

c) des moyens d'obtention d'un critère de performance du canal de transmission en fonction de ladite densité spectrale de puissance déterminée.

Le dispositif comprend des moyens de sélection, parmi ledit ensemble, d'une taille de champ d'entête en fonction d'une valeur du critère de performance du canal associé à ladite taille de champ d'entête.

L'invention concerne également un équipement récepteur d'au moins un bloc de données destiné à être transmis au travers d'un canal de transmission, comprenant au moins un dispositif de détermination de la taille d'un champ d'entête du bloc de données comprenant :

a) des moyens de choix d'une taille de champ d'entête parmi un ensemble de tailles prédéterminées distinctes de champs d'entête :

b) des moyens de détermination, pour ladite taille de champ d'entête choisie, et en fonction d'une réponse impulsionnelle du canal de transmission, d'une densité spectrale de puissance d'un bruit dû aux interférences présentes dans le canal de transmission,

c) des moyens d'obtention d'un critère de performance du canal de transmission en fonction de ladite densité spectrale de puissance déterminée.

Le dispositif comprend des moyens de sélection, parmi ledit ensemble, d'une taille de champ d'entête en fonction d'une valeur du critère de performance du canal associé à ladite taille de champ d'entête.

L'invention concerne encore un programme d'ordinateur comprenant des instructions de code de programme pour la mise en oeuvre des étapes du procédé de détermination de la taille d'un champ d'entête objet de l'invention lorsque le programme est exécuté par un processeur.

L'invention concerne enfin un support d'enregistrement lisible par un dispositif de terminaison de la taille d'un champ d'entête sur lequel est enregistré le programme d'ordinateur objet de l'invention.

D'autres caractéristiques et avantages apparaîtront à la lecture de modes de réalisation décrits en référence aux dessins dans lesquels :

- la figure 1 représente un système de transmission dans lequel le procédé de détermination de la taille d'un champ d'entête objet de l'invention est mis en oeuvre,

- la figure 2 représente la réponse impulsionnelle du canal de transmission du système de transmission représenté à la figure 1,

- la figure 3 représente un bloc de données destiné à être transmis au travers d'un canal de transmission,

- la figure 4 représente la série d'étapes mises en oeuvre lors de l'exécution du procédé de détermination de la taille d'un champ d'entête objet de l'invention,

- la figure 5 représente un équipement récepteur destiné à mettre en oeuvre le procédé de détermination de la taille d'un champ d'entête objet de l'invention.

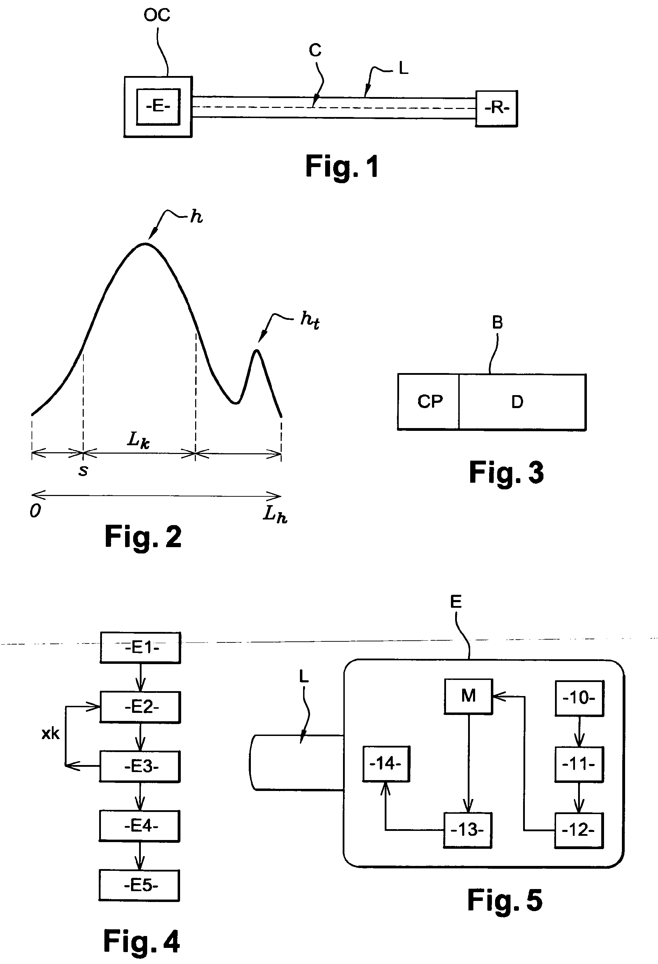

La figure 1 représente un système de communication S dans lequel le procédé de détermination de la taille d'un champ d'entête objet de l'invention est mis en oeuvre. Un tel système S comprend un équipement émetteur E disposé par exemple dans un central téléphonique OC, et un équipement récepteur R, tel qu'un modem xDSL ou un modem PLT, appartenant à un utilisateur final. L'équipement émetteur E est connecté à l'équipement récepteur R au moyen d'une liaison filaire L.

Lorsque, dans un premier mode de réalisation de l'invention, les équipements émetteurs E et récepteurs R sont des modems xDSL, la liaison L connectant l'équipement émetteur E disposé au central téléphonique à l'équipement récepteur R correspondant est une liaison xDSL, c'est-à-dire une liaison permettant le transfert de données modulées selon la technique xDSL. Une telle liaison L est par exemple une ligne de cuivre d'un câble de télécommunication.

Lorsque, dans un deuxième mode de réalisation de l'invention, les équipements émetteurs E et récepteurs R sont des modems PLT, la liaison L connectant l'équipement émetteur E à l'équipement récepteur R correspondant est une liaison PLT, c'est-à-dire une liaison permettant le transfert de données modulées selon la technique PLT. Une telle liaison L est par exemple un câble électrique.

Dans un troisième mode de réalisation de l'invention, les équipements émetteurs E et récepteurs R sont des équipements optiques, la liaison L connectant l'équipement émetteur E à l'équipement récepteur R correspondant est une fibre optique.

Dans un quatrième mode de réalisation de l'invention, les équipements émetteurs E et récepteurs R sont des équipements de radio-télécommunication, la liaison L connectant l'équipement émetteur E à l'équipement récepteur R correspondant est une liaison de radio-télécommunication.

Un canal de transmission C est établi entre l'équipement émetteur E et l'équipement récepteur R. Un tel canal de transmission est supporté par la liaison L connectant les équipements émetteur E et récepteur R.

Dans un système S tel que celui décrit en référence à la figure 1, la liaison L véhicule un signal contenant des données découpées en blocs de données B soit dans le sens remontant, c'est-à-dire depuis l'équipement de réception R appartenant à un utilisateur final vers l'équipement émetteur E correspondant disposé au niveau du central téléphonique OC, soit dans le sens descendant, c'est-à-dire depuis l'équipement émetteur E disposé au niveau du central téléphonique vers l'équipement récepteur R.

Les données destinées à être transmises au travers du canal de transmission sont codées selon des techniques de modulations multi-porteuses tel que la technique OFDM ou encore la technique DMT.

Dans de telles techniques de modulation multi-porteuses, le signal de données destiné à être transmis au travers du canal de transmission est divisé en une pluralité de signaux de données portés par une pluralité de sous-porteuses chacune associée à une sous-bande de fréquences de la bande passante du canal de transmission. De telles sous-porteuses sont orthogonales entre elles ce qui leur permet de se chevaucher et par conséquent d'augmenter la quantité de données à transmettre.

Ainsi lorsque le canal de transmission présente des chemins multiples le long desquels certaines fréquences sont détruites à cause de la combinaison destructive des chemins, il est tout de même possible de récupérer l'information perdue sur d'autres sous-porteuses de fréquences différentes qui ne sont pas affectées.

Afin de réduire le bruit dû aux interférences présentes dans le canal de transmission C, c'est-à-dire, entre blocs de données B appartenant au signal de données à transmettre, on ajoute à chaque bloc de données B un champ d'entête CP. Ce champ d'entête CP consiste en une recopie d'une partie des données D constitutives du bloc de données B. Un tel champ d'entête CP permet également de conserver la propriété d'orthogonalité entre les différentes sous-porteuses. Un tel bloc de données B est représenté à la figure 3.

L'introduction d'un tel champ d'entête CP de taille T constitue une redondance qui influe sur la qualité de transmission et le débit du système de transmission. En effet, un champ d'entête CP dont la taille T est trop courte ne permet pas de réduire le bruit dû aux interférences, et un champ d'entête CP trop long réduit le débit du système.

Dans un canal de transmission, la répartition de l'énergie en fonction de la fréquence est représentée au moyen d'une fonction appelée réponse impulsionnelle du canal de transmission.

Une telle fonction est représentée en référence à la figure 2. La réponse impulsionnelle du canal de transmission C présente une longueur $L_h$ et se découpe en trois parties.

Une première partie $h_h$ correspond au bruit dû aux interférences entre blocs de données ou ISI (*InterSymbol Interferences* ou interférences inter-symboles en français) et a pour longueur s. Une deuxième partie $L_k$, correspondant à la partie comprenant le maximum d'énergie, présente une longueur sensiblement égale à la taille T du champ d'entête CP. Une troisième partie $h_t$ correspond au bruit dû aux interférences entre sous-porteuses ou ICI (*InterCarrier Interferences* ou interférences inter-sous-porteuses en français).

En modifiant la taille T du champ d'entête CP, on modifie la longueur de la deuxième partie de la réponse impulsionnelle du canal de transmission et donc le bruit ISI et le bruit ICI. Une modification de la taille T du champ d'entête CP entraîne par conséquent une modification de la répartition de l'énergie entre les différentes fréquences de transmission du canal de transmission.

Le procédé de détermination de la taille T du champ d'entête CP objet de l'invention utilise l'impact de la modification de la taille T du champ d'entête CP sur les bruits ICI et ISI pour déterminer la taille optimale du champ d'entête à utiliser lors d'une transmission de données entre les équipements E et R. Les différentes étapes du procédé objet de l'invention, représentées à la figure 4, sont mises en oeuvre par l'équipement récepteur R.

Ainsi, au cours d'une étape E1 d'estimation de la réponse impulsionnelle du canal de transmission C. La réponse impulsionnelle du canal de transmission C est estimée au moyen de techniques connues telles que l'utilisation de séquences pilotes. On rappelle qu'une séquence pilote est une séquence de données émise par un émetteur et dont la valeur en réception est connue a priori du récepteur.

Au cours de l'exécution de l'étape E1, la taille $T_0$ du champ d'entête $CP_0$ est de l'ordre de la taille du bloc de données B. De cette manière le bruit mesuré au cours de l'étape E1 est indépendant de la taille du champ d'entête.

Une fois la réponse impulsionnelle du canal de transmission estimée, le procédé de détermination met en oeuvre une étape E2 de détermination, en fonction de la réponse impulsionnelle du canal de transmission, de la densité spectrale de puissance du bruit dû aux interférences présentes dans le canal de transmission, c'est-à-dire du bruit ISI et du bruit ICI. La densité spectrale de puissance du bruit ICI et ISI est déterminée, au cours de l'étape E2, pour une

première taille T$_1$ d'un premier champ d'entête CP$_1$ appartenant à un ensemble de k champs d'entête CP$_k$ de longueurs distinctes T$_k$.

Connaissant la valeur de la densité spectrale de puissance du bruit ICI et ISI pour le champ d'entête CP$_1$, un critère de performance P$_1$ du canal de transmission C est obtenu au cours d'une étape E3.

La valeur de ce critère de performance P$_1$ est mémorisée au niveau de l'équipement récepteur R.

Les étapes E2 et E3 sont exécutées pour les k champs d'entête CP$_k$ de l'ensemble de champs d'entêtes, ou au moins pour certains d'entre eux.

L'ensemble de k champs d'entête CP$_k$ est constitué à partir d'informations relatives au canal de transmission C telles que la longueur du canal de transmission, son atténuation, le nombre de sous-porteuses destinées à transmettre les données, etc.

Fort de ces informations, il est possible de déterminer une pluralité de champs d'entêtes de tailles T$_k$ différentes pouvant être utilisés au cours de transmissions de données au travers du canal de transmission C.

Une fois déterminées les k valeurs de densités spectrale de puissance du bruit ICI et ISI et les k valeurs du critère de performance P$_k$, le procédé exécute une étape E4 de sélection parmi l'ensemble des k champs d'entête CP$_k$, de la taille T$_k$ du champ d'entête en fonction d'une valeur du critère de performance P$_k$ associé à la taille T$_k$.

Dans un premier mode de réalisation de l'invention, le critère de performance P$_k$ tient compte du débit du canal de transmission C.

Ainsi, au cours de l'étape E3, on détermine la valeur du débit D$_k$ du canal de transmission selon l'équation suivante :

$$D_k = \frac{N}{N+T_k} \Delta_f \sum_f \log_2\left(1 + \frac{|H(f)|^2 \sigma_x^2(f)}{\Gamma\left(\sigma_n^2(f) + B_k(f)\right)}\right),$$

dans laquelle *N* représente la taille d'un bloc de données avant ajout du champ d'entête, $\Delta$ représente l'espace fréquentiel entre deux sous-porteuses, $H$ est la réponse fréquentielle du canal de transmission, $\sigma^2_x$ représente la variance du signal de données utile, $\sigma^2_n$ représente la variance du bruit inhérent au canal de transmission C mesuré au cours de la phase d'initialisation, et $\Gamma$ représente un facteur lié au taux d'erreur de transmission, *f* représente une fréquence utilisée pour la transmission.

Le calcul du débit D$_k$ est effectué pour les k champs d'entête CP$_k$.

Au cours de l'étape E4, on compare les k valeurs de débits D$_k$ déterminées à l'étape E3.

La taille de champ d'entête sélectionnée est la taille T$_k$ pour laquelle la valeur du débit D$_k$ est maximale.

La taille T$_k$ du champ d'entête CP$_k$ à utiliser lors de la transmission de données entre les équipements émetteur E et récepteur R est transmise au cours d'une étape E5 à l'équipement émetteur E.

Dans un deuxième mode de réalisation de l'invention, le critère de performance P$_k$ est la valeur du bruit dû aux interférences présentes dans le canal de transmission C et résulte des bruits ISI et ICI.

Ainsi, au cours de l'étape E3, on détermine la valeur du bruit B$_k$ dû aux interférences présentes dans le canal de transmission C selon l'équation suivante :

$$ISI(q) = \sigma_x^2\left(\sum_{m=-(N-1+s)}^{-N}\left|H_m^h(q)\right|^2 + \sum_{m=T_k+s+1}^{L_h-1}\left|H_m^t(q)\right|^2\right) \text{ et } B_k(q) = 2\,ISI(q),$$

dans laquelle ISI représente le bruit ISI, N la taille d'un bloc de données avant ajout du champ d'entête, $\sigma^2_x$ représente la variance du signal de données utile, *m* un indice de sommation, $H^h$ la réponse fréquentielle du bruit ISI, $H^t$ la réponse fréquentielle du bruit ICI, et *q* représente une fréquence utilisée pour la transmission, $L_h$ est la longueur de la réponse impulsionnelle du canal de transmission, *s* indique le début de la partie utile du canal de transmission.

Le calcul du bruit B$_k$ est effectué pour les k champs d'entête CP$_k$.

Au cours de l'étape E4, on compare les k valeurs de bruits B$_k$ déterminées à l'étape E3.

La taille de champ d'entête sélectionnée est la taille T$_k$ pour laquelle la valeur du bruit B$_k$ est minimale.

La taille T$_k$ du champ d'entête CP$_k$ à utiliser lors de la transmission de données entre les équipements émetteur E et récepteur R est transmise au cours d'une étape E5 à l'équipement émetteur E.

Le procédé de détermination objet de l'invention peut être mis en oeuvre aussi bien lors de l'initialisation du système de transmission S qu'au cours de son fonctionnement.

Lorsque le procédé de détermination de la taille d'un champ d'entête est mis en oeuvre au cours du fonctionnement du système de transmission, l'étape E1 n'est pas mise en oeuvre. En effet, la réponse impulsionnelle du canal de transmission n'est calculée que lors de l'initialisation du système de transmission.

En mettant en oeuvre le procédé objet de l'invention au cours du fonctionnement du système de transmission S, il est possible de prendre en compte des variations intervenues suite à l'exploitation du système de transmission S. Il est ainsi possible de modifier la taille du champ d'entête afin de transmettre avec un débit optimal.

La figure 5 représente un équipement récepteur R destiné à mettre en oeuvre l'invention.

Un tel équipement récepteur R constitue une première extrémité d'une liaison L établie entre l'équipement récepteur R et un équipement émetteur E.

Un tel équipement récepteur R comprend des moyens d'estimation 10 de la réponse impulsionnelle du canal de transmission C.

Connectés en sortie des moyens d'estimation 10, l'équipement récepteur R comprend des moyens de détermination 11, en fonction de la réponse impulsionnelle du canal de transmission, de la densité spectrale de puissance du bruit dû aux interférences présentes dans le canal de transmission C.

Connectés en sortie des moyens de détermination 11 l'équipement récepteur R comprend des moyens d'obtention 12 d'un critère de performance du canal de transmission C connaissant la valeur de la densité spectrale de puissance du bruit dû aux interférences présentes dans le canal de transmission C.

L'équipement récepteur R comprend des moyens de mémorisation M de la valeur de ce critère de performance.

L'équipement récepteur R comprend, connectés en sortie des moyens de mémorisation M, des moyens de sélection 13 parmi un ensemble de k champs d'entête, d'un champ d'entête de taille prédéterminée en fonction d'une valeur du critère de performance associé.

L'équipement récepteur R comprend, connectés en sortie des moyens de sélection 13, des moyens d'émission 14, à destination de l'équipement émetteur E, de la valeur de la taille du champ d'entête sélectionné.

Enfin, l'invention a aussi pour objet un programme d'ordinateur, notamment un programme d'ordinateur sur ou dans un support d'informations ou mémoire, adapté à mettre en oeuvre l'invention. Ce programme peut utiliser n'importe quel langage de programmation, et être sous la forme de code source, code objet, ou de code intermédiaire entre code source et code objet tel que dans une forme partiellement compilée, ou dans n'importe quelle autre forme souhaitable pour implémenter le procédé de détermination de la taille d'un champ d'entête selon l'invention.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

## Revendications

**1.** Procédé de détermination de la taille d'un champ d'entête d'un bloc de données destiné à être transmis au travers d'un canal de transmission, lesdits blocs de données étant codés selon une technique de modulation multi-porteuses, **caractérisé en ce que** le procédé comprend au moins une itération des étapes suivantes:

   a) une étape de choix d'une taille de champ d'entête parmi un ensemble de tailles prédéterminées distinctes de champs d'entête :
   b) une étape de détermination, pour ladite taille de champ d'entête choisie, et en fonction d'une réponse impulsionnelle du canal de transmission, d'une densité spectrale de puissance d'un bruit dû aux interférences entre blocs de données et aux interférences entre porteuses présentes dans le canal de transmission,
   c) une étape d'obtention d'un critère de performance du canal de transmission en fonction de ladite densité spectrale de puissance déterminée,

   et **en ce que**, à l'issue desdites itérations, ledit procédé met en oeuvre une étape de sélection, parmi ledit ensemble, d'une taille de champ d'entête en fonction d'une valeur du critère de performance du canal associé à ladite taille de champ d'entête.

**2.** Procédé de détermination de la taille d'un champ d'entête selon la revendication 1 dans lequel le critère de performance du canal de transmission tient compte du débit du canal de transmission.

**3.** Procédé de détermination de la taille d'un champ d'entête selon la revendication 2 dans lequel la taille de champ d'entête sélectionnée est celle pour laquelle la valeur du débit du canal de transmission est maximale.

**4.** Procédé de détermination de la taille d'un champ d'entête selon la revendication 1 dans lequel le critère de performance du canal de transmission tient compte de la valeur du bruit dû aux interférences présentes dans le canal de transmission.

**5.** Dispositif de détermination de la taille d'un champ d'entête d'un bloc de données destiné à être transmis au travers d'un canal de transmission, lesdits blocs de données étant codés selon une technique de modulation multi-porteuses, **caractérisé en ce que** le dispositif comprend :

a) des moyens de choix d'une taille de champ d'entête parmi un ensemble de tailles prédéterminées distinctes de champs d'entête :
b) des moyens de détermination, pour ladite taille de champ d'entête choisie, et en fonction d'une réponse impulsionnelle du canal de transmission, d'une densité spectrale de puissance d'un bruit dû aux interférences entre blocs de données et aux interférences entre porteuses présentes dans le canal de transmission,
c) des moyens d'obtention d'un critère de performance du canal de transmission en fonction de ladite densité spectrale de puissance déterminée,

et **en ce que** ledit dispositif comprend des moyens de sélection, parmi ledit ensemble, d'une taille de champ d'entête en fonction d'une valeur du critère de performance du canal associé à ladite taille de champ d'entête.

**6.** Equipement récepteur d'au moins un bloc de données destiné à être transmis au travers d'un canal de transmission, **caractérisé en ce qu'**il comprend au moins un dispositif de détermination de la taille d'un champ d'entête du bloc de données selon la revendication 5.

**7.** Programme d'ordinateur **caractérisé en ce qu'**il comprend des instructions de code de programme pour la mise en oeuvre des étapes du procédé de détermination de la taille d'un champ d'entête selon la revendication 1 lorsque le programme est exécuté par un processeur.

**8.** Support d'enregistrement lisible par un dispositif de terminaison de la taille d'un champ d'entête sur lequel est enregistré le programme selon la revendication 7.

**Claims**

**1.** Method for determining the size of a header field of a data block intended to be transmitted through a transmission channel, said data blocks being coded according to a multi-carrier modulation technique, **characterized in that** the method comprises at least one iteration of the following steps:

a) a step of choosing a size of header field from among a set of distinct predetermined sizes of header fields:
b) a step of determining, for said chosen size of header field, and as a function of an impulse response of the transmission channel, a power spectral density of noise due to the interferences between data blocks and to the interferences between carriers present in the transmission channel,
c) a step of obtaining a performance criterion for the transmission channel as a function of said power spectral density determined,

and **in that**, on completion of said iterations, said method implements a step of selecting, from among said set, a header field size as a function of a value of the performance criterion for the channel associated with said header field size.

**2.** Method for determining the size of a header field according to Claim 1, in which the performance criterion for the transmission channel takes account of the bitrate of the transmission channel.

**3.** Method for determining the size of a header field according to Claim 2, in which the header field size selected is that for which the value of the bitrate of the transmission channel is a maximum.

**4.** Method for determining the size of a header field according to Claim 1, in which the performance criterion for the transmission channel takes account of the value of the noise due to the interferences present in the transmission channel.

5. Device for determining the size of a header field of a data block intended to be transmitted through a transmission channel, said data blocks being coded according to a multi-carrier modulation technique, **characterized in that** the device comprises:

a) means for choosing a size of header field from among a set of distinct predetermined sizes of header fields:
b) means for determining, for said chosen size of header field, and as a function of an impulse response of the transmission channel, a power spectral density of noise due to the interferences between data blocks and to the interferences between carriers present in the transmission channel,
c) means for obtaining a performance criterion for the transmission channel as a function of said power spectral density determined,

and **in that** said device comprises means for selecting, from among said set, a header field size as a function of a value of the performance criterion for the channel associated with said header field size.

6. Receiver apparatus for at least one data block intended to be transmitted through a transmission channel, **characterized in that** it comprises at least one device for determining the size of a header field of the data block according to Claim 5.

7. Computer program **characterized in that** it comprises program code instructions for the implementation of the steps of the method for determining the size of a header field according to Claim 1 when the program is executed by a processor.

8. Recording medium readable by a device for determining the size of a header field on which the program according to Claim 7 is recorded.

**Patentansprüche**

1. Verfahren zur Bestimmung der Größe eines Kopfzeilenfelds eines Datenblocks, der dazu bestimmt ist, über einen Übertragungskanal übertragen zu werden, wobei die Datenblöcke gemäß einer Technik der Mehrträgermodulation codiert sind,
**dadurch gekennzeichnet, dass** das Verfahren mindestens eine Iteration der folgenden Schritte enthält:

a) eines Schritts der Wahl einer Kopfzeilenfeldgröße unter einer Einheit von unterschiedlichen vorherbestimmten Kopfzeilenfeldgrößen,
b) eines Schritts der Bestimmung, für die gewählte Kopfzeilenfeldgröße und abhängig von einer Impulsantwort des Übertragungskanals, einer spektralen Leistungsdichte eines Rauschens aufgrund der Störungen zwischen Datenblöcken und der Störungen zwischen im Übertragungskanal vorhandenen Trägerwellen,
c) eines Schritts des Erhalts eines Leistungskriteriums des Übertragungskanals abhängig von der bestimmten spektralen Leistungsdichte,

und dass nach den Iterationen das Verfahren einen Schritt der Auswahl, unter der Einheit, einer Kopfzeilenfeldgröße abhängig von einem Wert des Leistungskriteriums des der Kopfzeilenfeldgröße zugeordneten Kanals durchführt.

2. Verfahren zur Bestimmung der Größe eines Kopfzeilenfelds nach Anspruch 1, wobei das Leistungskriterium des Übertragungskanals den Durchsatz des Übertragungskanals berücksichtigt.

3. Verfahren zur Bestimmung der Größe eines Kopfzeilenfelds nach Anspruch 2, wobei die ausgewählte Kopfzeilenfeldgröße diejenige ist, bei der der Wert des Durchsatzes des Übertragungskanals maximal ist.

4. Verfahren zur Bestimmung der Größe eines Kopfzeilenfelds nach Anspruch 1, wobei das Leistungskriterium des Übertragungskanals den Wert des Rauschens aufgrund der im Übertragungskanal vorhandenen Störungen berücksichtigt.

5. Vorrichtung zur Bestimmung der Größe eines Kopfzeilenfelds eines Datenblocks, der dazu bestimmt ist, über einen Übertragungskanal übertragen zu werden, wobei die Datenblöcke gemäß einer Technik der Mehrträgermodulation codiert sind,
**dadurch gekennzeichnet, dass** die Vorrichtung enthält:

a) Einrichtungen zur Wahl einer Kopfzeilenfeldgröße unter einer Einheit von unterschiedlichen vorherbestimmten Kopfzeilenfeldgrößen,
b) Einrichtungen zur Bestimmung, für die gewählte Kopfzeilenfeldgröße und abhängig von einer Impulsantwort des Übertragungskanals, einer spektralen Leistungsdichte eines Rauschens aufgrund der Störungen zwischen Datenblöcken und der Störungen zwischen im Übertragungskanal vorhandenen Trägerwellen,
c) Einrichtungen zum Erhalt eines Leistungskriteriums des Übertragungskanals abhängig von der bestimmten spektralen Leistungsdichte,

und dass die Vorrichtung Auswahleinrichtungen, unter der Einheit, einer Kopfzeilenfeldgröße abhängig von einem Wert des Leistungskriteriums des der Kopfzeilenfeldgröße zugeordneten Kanals enthält.

6. Empfängerausrüstung mindestens eines Datenblocks, der dazu bestimmt ist, über einen Übertragungskanal übertragen zu werden, **dadurch gekennzeichnet, dass** sie mindestens eine Vorrichtung zur Bestimmung der Größe eines Kopfzeilenfelds des Datenblocks nach Anspruch 5 enthält.

7. Computerprogramm, **dadurch gekennzeichnet, dass** es Programmcodeanweisungen für die Durchführung der Schritte des Verfahrens zur Bestimmung der Größe eines Kopfzeilenfelds nach Anspruch 1 enthält, wenn das Verfahren von einem Prozessor ausgeführt wird.

8. Aufzeichnungsträger, der von einer Vorrichtung zur Bestimmung der Größe eines Kopfzeilenfelds lesbar ist, auf dem das Programm nach Anspruch 7 aufgezeichnet ist.

**Fig. 1**

**Fig. 2**

**Fig. 3**

**Fig. 4**

**Fig. 5**

## RÉFÉRENCES CITÉES DANS LA DESCRIPTION

**Documents brevets cités dans la description**

- EP 1940068 A

**Littérature non-brevet citée dans la description**

- **Z.ZHANG ; L. LAIL.** A Novel OFDM transmission scheme with length-adaptative Cyclic Prefix. *Journal of Zhejiang University Science,* 2004, vol. 5 (11), 1336-1342